(19) Europäisches Patentamt
European Patent Office
Office européen des brevets

(11) EP 0 636 207 B1

(12) EUROPEAN PATENT SPECIFICATION

(45) Date of publication and mention
of the grant of the patent:
**04.06.1997 Bulletin 1997/23**

(51) Int Cl.⁶: **F01N 1/06**, F01N 7/18,
F01N 1/00, F01N 1/08,
F01N 1/16, A61F 11/06,
H03B 29/00, G10K 11/16

(21) Application number: **92916056.2**

(22) Date of filing: **15.04.1992**

(86) International application number:
**PCT/US92/03025**

(87) International publication number:
**WO 93/21428 (28.10.1993 Gazette 1993/26)**

(54) **ADAPTIVE MULTIFREQUENCY REACTIVE MUFFLER**

ADAPTIVER MEHRFREQUENZ-REAKTIV-SCHALLDÄMPFER

SILENCIEUX REACTIF MULTIFREQUENCE ADAPTATIF

(84) Designated Contracting States:
**AT BE CH DE DK ES FR GB GR IT LI LU MC NL SE**

(43) Date of publication of application:
**01.02.1995 Bulletin 1995/05**

(73) Proprietor: **NOISE CANCELLATION
TECHNOLOGIES, INC.
Linthicum, MD 21090 (US)**

(72) Inventor: **EGHTESADI, Ceasar
Shelton, CT (US)**

(74) Representative: **Wilhelm & Dauster
Patentanwälte European Patent Attorneys
Hospitalstrasse 8
70174 Stuttgart (DE)**

(56) References cited:
WO-A-91/09214          US-A- 4 111 278
US-A- 4 371 054          US-A- 4 537 279
US-A- 5 097 923

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a method for adaptive, multifrequency reactive attenuation of a muffler according to the introductory portion of claim 1 and to an adaptive, multifrequency reactive muffler system according to the introductory portion of claim 3.

Active noise cancellation mufflers have been developed by Noise Cancellation Technologies, Inc. and are subject of WO 89/07701. This muffler system comprises a muffler having an ingress and an egress for the passage therethrough of exhaust gas, a microphone for detecting the noise at the egress of the muffler, a controller connected to the microphone and loudspeakers attached to the muffler which loudspeakers are controlled by the controller for active noise attenuation.

It is object of the present invention to find a method and a muffler system which produces the desired results in a different way.

This object is achieved for the method by claim 1 and for the muffler system by claim 3.

It has been found that, in certain applications, a double chambered muffler produces the desired result. It has been proved very effective with minimum loss of power and the length and thereby the relative sizes of the chambers can be varied by moving the partition between them.

The invention and its objects will become readily apparent when reference is made to the accompanying drawings in which

Fig. 1 is a plot of transmission loss against frequency based on the muffler view dimensions accompanying it.

Fig. 2 is general configuration of the double chamber muffler of this invention,

Fig. 3 is a plot of the transmission loss curve versus frequency, and

Fig. 4 shows the double chamber muffler with a movable partition.

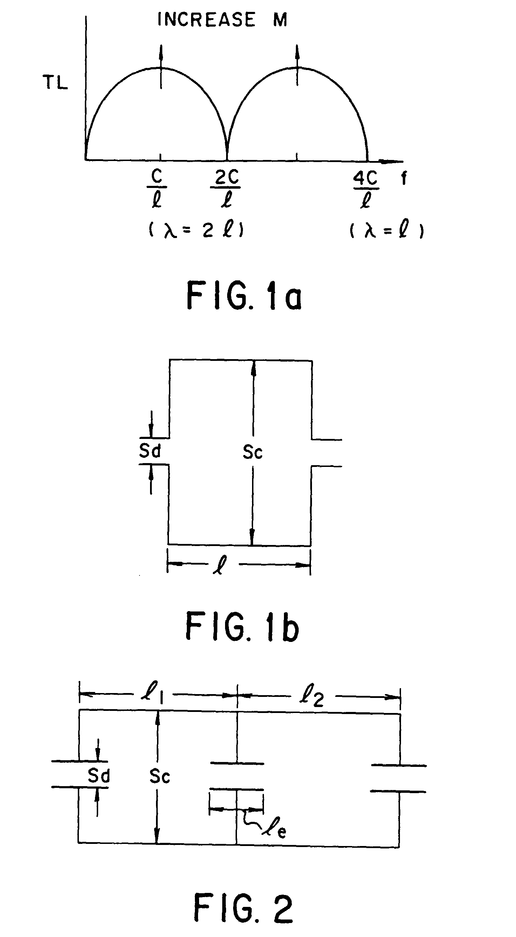

An expansion chamber geometry (Fig. 1), having a length "$\ell$" and an abrupt change in cross-sectional area at each end provides Transmission Loss (TL) in the absence of a steady air flow by the Equation (1):

$$TL = 10\log\left[1+\frac{1}{4}\left(m-\frac{1}{m}\right)^2 \sin^2(kl)\right] \qquad \text{(dB)} \qquad \text{Eq. (1)}$$

$S_c$   Cross sectional area of expansion chambers

$S_d$   Cross sectional area of duct

$k$

$$\textbf{Wave Number} \quad \left(\frac{\Omega}{c}\right)$$

$\ell$   Expansion Chamber length

$$m = \frac{Sc}{Sd}$$

The addition of a second chamber of different length permits each chamber to attenuate further the other's passband (Fig. 2). Transmission Loss of the two chambers can be approximately defined by Equation (2):

$$TL = 10\log\left[1+\tfrac{1}{4}\left(m-\tfrac{1}{m}\right)^2 \sin^2(k\ell_1)\right]\left[1+\tfrac{1}{4}\left(m-\tfrac{1}{m}\right)^2 \sin^2(k\ell_2)\right] \qquad \text{Eq. (2)}$$

Most passbands can be attenuated by making the inlet and outlet pipes protrude into each chamber. For a pipe intrusion of length ($l_e$), a series of narrow attenuation spikes occurs at the frequencies such that $\ell_e = \frac{n\lambda}{4} = \frac{nc}{4f}$ ($n$ integer number 1, 2, 3..).

The Fig. (3) shows the general shape of Transmission Loss Curve.
The following parameters basically govern the acoustical performance of reactive muffler.

1 - Noise specification in terms of required $TL$ and radiated sound power level at a known distance.
2 - Source characteristics described in terms of source impedance and source strength $Z_s,(\cup s)$.
3 - Muffler location which can be described in terms of length of exhaust and tail pipes.
4 - Termination characteristics which can be described in terms of radiation impedance (Zr).

Among the parameters particularly affecting the performance of the Double Expansion Chamber Muffler are several which are hereinafter described.

. The Muffler arrangement has proved very effective with minimum loss of power, though prediction of its performance would be extremely complicated. The relative lengths of the chamber and pipes are quite critical to the performance, requiring accurate manufacturing and precision.

. Experimental and theoretical work proved the suitable chamber length ratios, which prevent coinciding passbands below about 10 KHz, are 1.1, 1.6 and 2.2. The larger chamber should be placed in first ($\ell_1 > \ell_2$) to minimize power loss.

. The $TL$ of an expansion chamber with pipe is reduced by high air flow (over 30 m/sec). For air flow under 15 m/sec, air flow has little effect on $TL$, for air flow between 15 to 30 m/sec. the effect is about 6 to 10 db.

The following parameters were used in the design of a specific compressor muffler.

Duct Diameter = 0.05 $m$
Chamber Diameter $\leq$ 0.25 $m$
Chamber Length $\leq$ 0.5 $m$
Speed of Sound at the compressor temperature = 426 m/sec
Mean Flow Speed = 18 m/sec

For a Double Chamber Muffler:

$$\ell_1 + \ell_2 = 0.5\, meters$$

$$m = \frac{S_c}{S_d} = \left(\frac{D_c}{D_d}\right)^2 = \left(\frac{0.25}{0.05}\right)^2 = 25$$

$$\frac{1}{4}\left(m - \frac{1}{m}\right)^2 = \frac{1}{4}\left(25 - \frac{1}{25}\right)^2 \approx 156$$

Assuming then, $\ell_1 \approx 1.1 e_2$, then, $e_1 \approx 0.27\,m, \cdot \ell_2 \approx 0.23\,m$
The Equation (2) describes the $TL$, substitute the above values into the equation which provide us the following:

$$TL = 10\log\left[1 + 156\sin^2\left(\frac{0.27\Omega}{426}\right)\right]\left[1 + 156\sin^2\left(\frac{0.23\Omega}{426}\right)\right] \qquad \text{Eq. (3)}$$

In analyzing the attenuation level at the frequencies : $f$ = 130, 260, 390, 520 and 650 Hz. These are the fundamental noise frequencies and its harmonics. Table 1 shows the attenuation as a function of frequency. In the first column of the table, the attenuation levels are described at the fundamental frequency and its harmonics, at the second column the attenuation of the fundamental and its harmonics is shifted by 20% and the last column if $\ell_1$ and $\ell_2$ change to 0.255 m and 0.245 m at the shifted frequencies.

| $f$(Hz) | $TL$(dB) | $TL$(dB) | $TL$(dB) |
|---|---|---|---|
| 130 | 30.6 | 33.4 | 33.4 |

(continued)

| $f$(Hz) | $TL$(dB) | $TL$(dB) | $TL$(dB) |
|---|---|---|---|
| 260 | 40.4 | 42.2 | 42.3 |
| 390 | 43.6 | 43.5 | 43.6 |
| 520 | 42.6 | 38.3 | 38.7 |
| 650 | 36.5 | 16.3 | 21 |

The above chart shows that the Double Chamber Muffler can provide significant attentuation at the desirable frequencies. But it is highly sensitive to the frequencies of operation. The 20% shift (increase) of the fifth harmonic reduces the attenuation at this frequency by 20 dB.

If we assume 20 dB is the minimum requirement for the $TL$, the attenuation for the fifth harmonic is not acceptable if it is shifted by 20%. Now if we change $\ell_{,1}$ and $\ell_2$ to 0.255 m and 0.245 m ($\ell_1 + \ell_2 = 0.5m$), the minimum requirement for the fifth harmonics will be met (21 dB attenuation).

Considering the above sensitivity, an adaptive control system must be developed to accommodate this limitation and take advantage of the capabilities of the Double Chamber Muffler.

According to the analysis and Equation (2), the ratio of the length of the chamber has a major impact on the $TL$ ($\ell_1 + \ell_2$ = constant). This ratio can be used as a single variable to modify the performance accordingly. Any deviation in the dynamics of the system such as shift in fundamental frequency or its harmonics, temperature, air flow, source and tonal impedance,...etc can be accomodated by changing the ratio of the length of the two chambers.

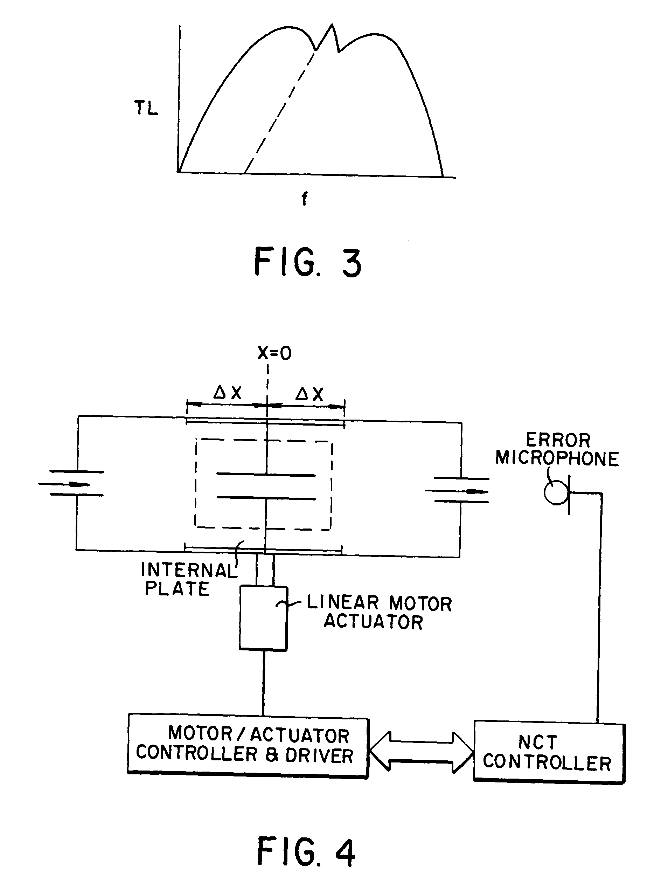

To develop an adaptive muffler, an electronic controller plays a major role in the system. A linear motor/actuator controller should be used to execute this adaptation (Fig. 4). The other components of the system are: an error microphone, and a linear motor or actuator.

An internal plate with the attached pipe(s) should be moved inside a slot in both directions ($\pm\Delta\times$) to change the length ratio of the chambers. This motion is derived and controlled by the motor controller under the command of the electronic controller that continuously monitors the error microphone and tries to minimize the overall noise level.

The adaptation starts when the internal plate is located at $\chi$ = o. The error microphone detects the noise, the electronic controller analyze the noise level at the fundamental frequency and its harmonics, sends an appropriate command to the motor controller to move the plate by an increment of $\frac{\Delta x}{n}$. This process continues until the minimum noise level is achieved.

The electronic controller continuously modify the location of the internal plate to accommodate all the changes of the system parameters (temperature, air flow,..etc.)

The Equation (2) is a basic equation that describes the overall performance of a Double Chamber Muffler, A number of parameters should be analyzed, determined and optimized before the adapting system is applied to the muffler in each application. The steps are:

1. Quantify the physical dimensions of the Muffler:
chamber diameter, duct diameter, chamber length, length of the internal pipe, number of internal pipes, intrusion of inlet and outlet pipes, offset between inlet and outlet pipe, ..etc.
2. Calculate the $TL$ as a function of frequency, estimate the sensitivity to changes in ambient pressure, temperature and air flow.
3. Quantify the effect of the adaptive element on the performance and the required value for $\Delta\chi$). Determine the best location for $\chi$=o (starting point).

## Claims

1. Method for adaptive, mulfitfrequency reactive attentuation of a muffler having an ingress and an egress for the passage therethrough of exhaust gases comprising the steps of

    - detecting the noise at the egress of the muffler by means of a microphone,
    - analyzing the noise by means of an electronic controller, and
    - controlling active noise attenuation means,

    characterized in that an adjustable partition provided with one or more apertures divides the muffler into a first chamber receiving the exhaust gases and a second chamber receiving exhaust gases from the first chamber through the partition and releasing the exhaust gases to the atmosphere, and in that during operation the position of the partition is adjusted by means of the controller for changing the relative sizes of the first chamber and the second chamber and thereby adaptively attenuating passbands of the exhaust gases.

2. Method according claim 1, further characterized in that the electronic controller computes errors of attenuation and causes the partition to move to eliminate these errors.

3. Adaptive, multifrequency reactive muffler system for carrying out the method of claim 1 comprising

- a muffler having an ingress and an egress for the passage therethrough of exhaust gases,
- a microphone for detecting the noise at the egress of the muffler,
- an electronic controller connected to the microphone, and
- means controlled by the controller for active noise attenuation,

characterized in that the muffler between its ingress and egress comprises a first chamber and a second chamber separated from each other by means of a partition having one or more apertures which partition allows exhaust gases to pass from the first chamber to the second chamber to which partition motor means are connected which motor means are controlled by the controller for moving during operation the partition to change the relative sizes of the first and second chamber and thereby adaptively attenuating passbands of the exhaust gases.

4. Muffler system according claim 3, further characterized in that the second chamber is longer than the first chamber and in that the partition is adjustable such that the second chamber has a length 1.1 times to 2.2 times as long as the first chamber.

**Patentansprüche**

1. Verfahren zur adaptiven Mehrfrequenz-Reaktiv-Dämpfung eines Schalldämpfers mit einem Einlaß und einem Auslaß für den Durchtritt von Abgasen durch denselben hindurch, das die Schritte umfaßt:

- Detektieren des Geräusches am Auslaß des Schalldämpfers mittels eines Mikrophons;

- Analysieren des Geräusches mittels einer elektronischen Steuereinrichtung und

- Steuern von aktiven Geräuschdämpfungsmitteln,

dadurch gekennzeichnet, daß ein einstellbares Trennelement, das mit einer oder mehreren Öffnungen versehen ist, den Schalldämpfer in eine erste Kammer, welche die Abgase aufnimmt, und eine zweite Kammer unterteilt, welche Abgase von der ersten Kammer durch das Trennelement hindurch empfängt und die Abgase an die Atmosphäre abführt, und dadurch, daß die Position des Trennelements während des Betriebs mittels der Steuereinrichtung eingestellt wird, um die relativen Abmessungen der ersten Kammer und der zweiten Kammer zu verändern und dadurch Durchlaßbänder der Abgase adaptiv zu dämpfen.

2. Verfahren nach Anspruch 1, weiter dadurch gekennzeichnet, daß die elektronische Steuereinrichtung Dämpfungsfehler berechnet und bewirkt, daß das Trennelement sich so bewegt, daß diese Fehler eliminiert werden.

3. Adaptives Mehrfrequenz-Reaktiv-Schalldämpfersystem zur Durchführung des Verfahrens nach Anspruch 1 mit

- einem Schalldämpfer mit einem Einlaß und einem Auslaß für den Durchtritt von Abgasen durch denselben,

- einem Mikrophon zum Detektieren des Geräusches am Auslaß des Schalldämpfers,

- einer elektronischen Steuereinrichtung, die mit dem Mikrophon verbunden ist, und

- Mitteln, die von der Steuereinrichtung zwecks aktiver Geräuschdämpfung gesteuert werden,

dadurch gekennzeichnet, daß der Schalldämpfer zwischen seinem Einlaß und Auslaß eine erste Kammer und eine zweite Kammer beinhaltet, die mittels eines Trennelements mit einer oder mehreren Öffnungen voneinander getrennt sind, wobei dieses Trennelement den Durchtritt von Abgasen von der ersten Kammer in die zweite Kammer erlaubt, mit der Trennelement-Motormittel verbunden sind, wobei diese Motormittel von der Steuereinrichtung gesteuert werden, damit sie während des Betriebs das Trennelement bewegen, um die relativen Abmessungen der ersten und zweiten Kammer zu verändern und dadurch Durchlaßbänder der Abgase adaptiv zu dämpfen.

**4.** Schalldämpfersystem nach Anspruch 3, weiter dadurch gekennzeichnet, daß die zweite Kammer länger als die erste Kammer ist, und dadurch, daß das Trennelement derart einstellbar ist, daß die zweite Kammer eine Länge aufweist, die 1,1 mal bis 2,2 mal größer als diejenige der ersten Kammer ist.

**Revendications**

**1.** Procédé pour l'atténuation adaptative, multifréquence et réactive pour silencieux, comportant une entrée et une sortie pour permettre aux gaz d'échappement de le traverser, comprenant les étapes suivantes:

- la détection du bruit à la sortie du silencieux au moyen d'un microphone,
- l'analyse du bruit au moyen d'un contrôleur électronique, et
- le contrôle de moyens actifs d'atténuation du bruit,

caractérisé en ce qu'une cloison réglable munie d'une ouverture, ou de plusieurs ouvertures, divise le silencieux en une première chambre recevant les gaz d'échappement, et en une seconde chambre recevant les gaz d'échappement de la première chambre à travers la cloison et libérant les gaz d'échappement dans l'atmosphère, et en ce que, en cours d'utilisation, la position de la cloison se règle au moyen du contrôleur, de façon à modifier la taille relative de la première et de la seconde chambre, ce qui permet d'atténuer de façon adaptative les bandes passantes des gaz d'échappement.

**2.** Procédé selon la revendication 1, caractérisé en outre en ce que le contrôleur électronique calcule les erreurs d'atténuation, et déplace la cloison de façon à éliminer ces erreurs.

**3.** Système de silencieux adaptatif, multifréquence et réactif, destiné à mettre en oeuvre le procédé de la revendication 1, comprenant:

- un silencieux comportant une entrée et une sortie pour permettre aux gaz d'échappement de le traverser,
- un microphone pour mesurer le bruit à la sortie du silencieux,
- un contrôleur électronique relié au microphone, et
- des moyens actifs d'atténuation du bruit, contrôlés par le contrôleur,

caractérisé en ce que le silencieux comprend entre son entrée et sa sortie une première chambre et une seconde chambre séparées par une cloison comportant une ouverture, ou plusieurs ouvertures, laquelle cloison d'une part permet aux gaz d'échappement de passer de la première à la seconde chambre, et d'autre part est reliée à des moyens à moteur, ces moyens à moteur pouvant déplacer la cloison en cours d'utilisation, sous le contrôle du contrôleur, afin de modifier les tailles relatives de la première et seconde chambres, ce qui permet d'atténuer de façon adaptative les bandes passantes des gaz d'échappement.

**4.** Système de silencieux selon la revendication 3, caractérisé en outre en ce que la seconde chambre est plus longue que la première chambre, et en ce que la paroi peut être réglée de telle sorte que la seconde chambre ait une longueur comprise entre 1,1 et 2,2 fois la longueur de la première chambre.

INCREASE M

TL

$\frac{C}{\ell}$    $\frac{2C}{\ell}$    $\frac{4C}{\ell}$    f

$(\lambda = 2\ell)$    $(\lambda = \ell)$

# FIG. 1a

Sd

Sc

$\ell$

# FIG. 1b

$\ell_1$    $\ell_2$

Sd

Sc

$\ell_e$

# FIG. 2

TL

f

# FIG. 3

X=0

ΔX ΔX

ERROR
MICROPHONE

INTERNAL
PLATE

LINEAR MOTOR
ACTUATOR

MOTOR/ACTUATOR
CONTROLLER & DRIVER

NCT
CONTROLLER

# FIG. 4